# EUROPEAN PATENT SPECIFICATION

(11) **EP 3 854 247 B1**
(45) Date of publication and mention of the grant of the patent: **23.10.2024**
(21) Application number: 18933866.8
(22) Date of filing: 20.09.2018
(51) Int. Cl.: A42B 3/04

(54) **SAFETY HELMET LIGHTING DEVICE**
BELEUCHTUNGSVORRICHTUNG FÜR SICHERHEITSHELM
DISPOSITIF D'ÉCLAIRAGE DE CASQUE DE SÉCURITÉ

(30) Priority: 19.09.2018 KR 20180112209
(43) Date of publication of application: 28.07.2021
(73) Proprietor: KMX Co., Ltd, Ulsan 44542 (KR)
(72) Inventor: KIM, Sung Gyu, Uljin-gun, Gyeongsangbuk-do 36316 (KR)
(74) Representative: BCKIP Part mbB
(86) International application number: PCT/KR2018/011176
(87) International publication number: WO 2020/059912

(56) References cited:
- EP-A1- 3 138 430
- JP-A- 2015 166 508
- KR-A- 20170 138 862
- KR-A- 20180 010 083
- KR-A- 20180 079 075
- KR-B1- 101 817 606
- KR-Y1- 200 447 771
- US-A1- 2009 073 679
- US-A1- 2013 223 070

## Description

### [Technical Field]

The present invention relates to a safety helmet lighting device and, more specifically, to a safety helmet lighting device which can provide lighting to allow a user to keep his or her eyes looking forward, is capable of indicating the user's location by emitting light from the entire surface of a ringshaped frame, and can indicate a distant object with a laser pointer.

### [Background Art]

Workers who always work in circumstances of great danger and difficulty, such as construction sites, firefighting scenes, or other workshops of industries, are obligated to wear safety helmets for safety.

Moreover, there are lots of sports games, such as baseball games, inline skates, cycling events, or skating events, having the rule that players should wear safety helmets in order to protect their heads. Meanwhile, recently, many people who enjoy outdoor activities or leisure activities as well as such workers or players demand safety helmets as essential safety equipment.

Such safety helmets are mass-produced through very meticulous processes in consideration of weight or safety in order to protect users' heads, and have ever-increasing functions.

Meanwhile, there are also safety helmets having lighting devices for night work or activities. Such a lighting device is combined with the safety helmet or is detachably attached to the safety helmet.

However, because the conventional lighting devices are provided only for lighting to allow a user to keep his or her eyes looking forward but are not enough to indicate the user's location, accidents that users collide with vehicles passing by construction sites frequently occur.

Furthermore, a workers who is working in a dark space carries a laser pointer in order to indicate a distant object while working. In this instance, it is inconvenient to carry the laser pointer, and the user cannot freely use his or her hands in using tools while working since having the laser pointer in his or her hand.

US 2013/223070 A1 discloses a light-emitting system which is removably attachable to headgear. The light-emitting system includes a housing that defines a receiving aperture and is configured to surround a portion of the headgear when the light-emitting system is removably attached to the headgear for use.

KR 20180010083 A discloses a connector and a smart helmet using the same. The connectors electrically connect a plurality of module bodies provided with light emitting bodies to each other and arrange the module bodies along a circumference. Each connector includes a connector band holding a power cable for supplying power and a pair of coupling devices. Each module body includes fitting grooves into which the coupling devices of the connectors are fitted and coupled on both ends and at least one light emitting body. The connectors and module bodies are connected to each other in a closed loop shape and are mountable to the helmet body by means of a fixated unit arranged at least one of the module bodies and the connectors to be fixated at the helmet body.

### [Disclosure]

### [Technical Problem]

Accordingly, the present invention has been made in an effort to solve the above-mentioned problems occurring in the prior arts, and it is an object of the present invention to provide a safety helmet lighting device, which can emit light using a portable battery and warn shortage of remaining quantity of the battery through vibration or flickering.

It is another object of the present invention to provide a safety helmet lighting device which is mounted on a safety helmet and has light-emitting portions disposed on the entire circumference as well as on the front surface of the safety helmet.

It is a further object of the present invention to provide a safety helmet lighting device, which is very compatible with various safety helmets of various sizes and forms.

It is a still further object of the present invention to provide a safety helmet lighting device, which has a laser pointer to indicate a distant object.

### [Technical Solution]

To achieve the above objects, the present invention provides a safety helmet lighting device according to claim 1, including: a frame formed in a ring shape to be mounted on the outer circumferential surface of a safety helmet; a plurality of light-emitting portions provided on the outer face of the frame; a battery for supplying electric power; a controller for controlling brightness and colors of the light-emitting portions; and close contact means for preventing the frame from being separated from the safety helmet.

Moreover, the close contact means are disposed on the inner face of the frame and are elastic members elastically transformed when the frame is mounted on the safety helmet.

Furthermore, the elastic member includes a friction pad made of a material to get in contact with the safety helmet and to prevent slipping.

Additionally, the frame includes a guide groove for allowing the elastic member mounted on the frame to be movable along the inner surface of the frame.

In addition, the battery is a portable battery which is electrically connected with the frame via a cable.

Moreover, the frame includes a vibrator for generating vibration in order to let a user know shortage of the residual quantity of the battery if the residual quantity of the battery is less than a predetermined quantity.

Furthermore, the controller controls flickering of the light-emitting portions if the residual quantity of the battery is less than a predetermined quantity.

Additionally, the frame includes a motion sensor for recognizing the user's motion, and the controller turns off the light-emitting portions when there is no motion for a predetermined period of time according to the sensed result of the motion sensor.

In addition, the frame includes a first frame and a second framed which are disposed to be collapsible.

### [Advantageous Effects]

According to the present invention, the safety helmet lighting device can emit light using a portable battery and warn shortage of remaining quantity of the battery through vibration or flickering.

Additionally, the safety helmet lighting device according to the present invention can be utilized as lighting for working and can prevent safety accidents by letting others know a user's location since including the light-emitting portions disposed on the entire circumference as well as on the front surface of the safety helmet.

In addition, the safety helmet lighting device according to the present invention can control brightness and colors of the light-emitting portions depending on places and purposes.

Moreover, the safety helmet lighting device according to the present invention can improve visibility by controlling flickering of the light-emitting portions.

Furthermore, the safety helmet lighting device according to the present invention can be connected to a general-purpose battery or an exclusive portable battery.

Additionally, the safety helmet lighting device according to the present invention, which includes the laser pointer, can indicate a distant object and can allow the user to freely use his or her hands since there is no need to hold a laser pointer with the user's hand.

Especially, the safety helmet lighting device according to the present invention can be mounted on one of various safety helmets stably.

### [Description of Drawings]

FIG. 1 is a view showing a used state of a safety helmet lighting device according to an embodiment of the present invention.
FIG. 2 is a perspective view showing the safety helmet lighting device illustrated in FIG. 1.
FIG. 3 is a view showing essential parts of the safety helmet lighting device illustrated in FIG. 1.
FIGS. 4 and 5 are respectively a front view and a rear view of the safety helmet lighting device illustrated in FIG. 1.
FIG. 6 is a view showing a state where the safety helmet lighting device illustrated in FIG. 1 is collapsed.

### [Best Mode]

A safety helmet lighting device includes a frame 10 having a guide groove 11 formed along a rim of the upper surface thereof.

Especially, the frame 10 has collapsible parts 13 formed at opposed points based on the center.

Moreover, the guide groove 11 is formed long along the inner rim of the upper surface of the frame 10, and a plurality of close contact means 20 are disposed in the guide groove 11 to be movable. In this embodiment, four close contact means 20 by twos are disposed at the right and the left.

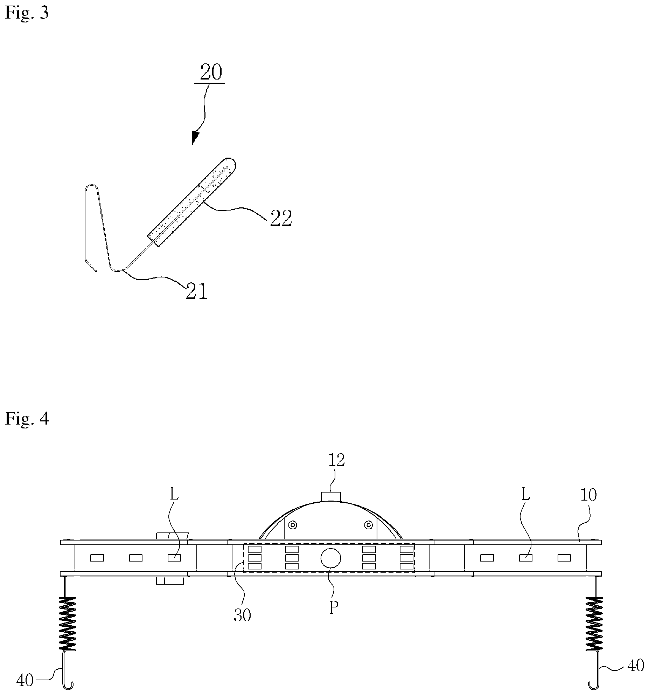

Each of the close contact means 20 includes: a plate spring 21 formed by a metal plate bent; and a friction pad 22 surrounding an end of the plate spring 21 (See FIG. 3). In this embodiment, the friction pad 21 is made of silicon, but may be made of one of various materials which do not slip on a safety helmet.

An end of the plate spring 21 is inserted into the guide groove 11, and the frame 10 gets in contact with the safety helmet while being elastically transformed when the frame 10 is mounted on the safety helmet.

The frame 10 can be mounted on the safety helmet stably while the friction pads 22 move to the position that the friction pads 22 come into the closest contact with the safety helmet since the close contact means 20 can move along the guide groove 11.

Therefore, the frame has improved compatibility since coping with various forms and sizes of safety helmets. That is, there are places that the plate springs 21 are elastically transformed the most while the close contact means 20 move along the guide groove 11, and the friction pads 22 come into the closest contact with the safety helmet at the places. So, the frame can get in the closest contact with the safety helmet and can be fixed stably.

In this embodiment, the close contact means 20 include the plate springs 21, but may include elastic rubber in place of the plate springs. In this instance, the elastic rubber is combined with a holder mounted in the guide groove 11 to be disposed on the inner face of the frame. Since the holder moves along the guide groove like the plate spring, the position of the elastic rubber can be varied.

### [Mode for Invention]

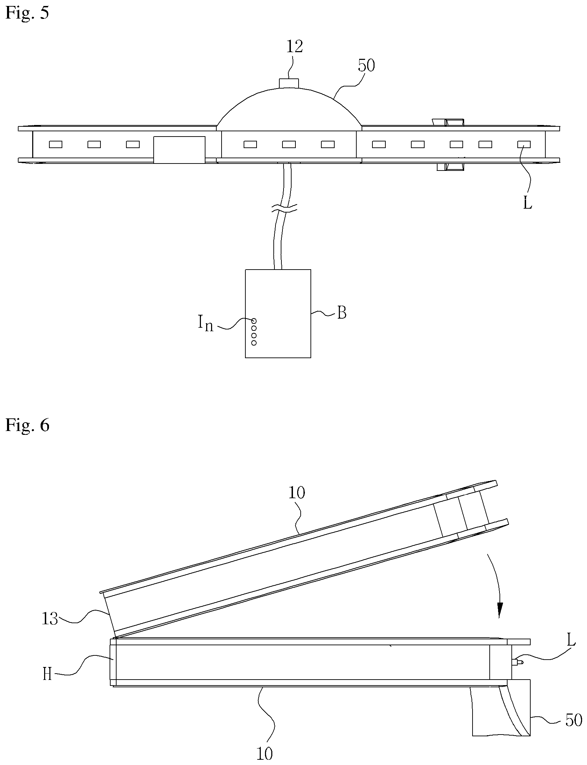

FIGS. 4 and 5 are respectively a front view and a rear view of a safety helmet lighting device according to an embodiment of the present invention. As shown in the drawings, the frame 10 includes light-emitting portions L disposed on the entire outer circumferential surface thereof to be spaced apart from one another at predetermined intervals. In this embodiment, the light-emitting portions are LED devices. Therefore, the light-emitting portions L are disposed on the front surface of the frame and are also arranged on the entire outer circumferential surface of the frame 10 in a band type. Therefore, the light-emitting portions L emit light not only at the front side but also at the lateral sides or the rear side. As described above, the safety helmet lighting device emits light at the lateral side and the rear side as well as at the front side in order to let people know a user's location. That is, the safety helmet lighting device according to the embodiment of the present invention can prevent safety accidents, such as traffic accidents, by letting people know the user's place.

Moreover, a headlight portion 30 is disposed on the front side of the frame 10. The headlight portion 30 will be described in detail. The headlight portion 30 is configured in such a way that the light-emitting portions L are vertically arranged in three rows so that the light-emitting portions L of the headlight portion 30 are brighter than the light-emitting portions of the lateral side or the rear side. The headlight portion 30 emits strong light to allow the user to keep his or her eyes forward.

The light-emitting portions L may be formed in a single color or may have RGB colors.

Furthermore, a controller 50 is disposed at the rear side of the frame 10. The controller 50 can control colors of LED devices of many colors.

Additionally, the controller 50 can control flickering of the light-emitting portions L, and control dimming to control brightness.

Especially, the headlight portion 30 has a laser pointer P disposed at the center thereof. The laser pointer P can indicate a distant object or place. As described above, since the safety helmet lighting device has the laser pointer P, it is not necessary for the user to carry a laser pointer, and the user can freely use his or her hands since the laser pointer of the safety helmet lighting device indicates a distant object without using the user's hand.

In addition, the controller 50 has a port (not shown) formed at the bottom side thereof in order to supply electric power. In the drawing, a portable battery B which is widely used to charge smart phones is connected to the controller 50 of the safety helmet lighting device.

Because the portable battery B can be connected to the controller via a cable, the controller can be easily charged using the battery. The portable battery B has an indicator to show the residual quantity of the battery. The indicator (In) is a luminous body disposed on one side of the battery, and has four stage indication signs.

The battery may be an auxiliary battery of a general purpose which has been widely used to charge smart phones, or may be an exclusive battery which is capable of being only used in this invention.

Moreover, the controller 50 has a power button 12 to turn on or off the light-emitting portions L.

Furthermore, the safety helmet lighting device according to the present invention includes close contact means 20 to prevent the frame 10 from being separated from a safety helmet 100 after being mounted on the safety helmet 100. That is, the frame 10 is mounted on the safety helmet 100, and is stably combined with the safety helmet by fastening means 40.

FIG. 6 is a view showing a state where the safety helmet lighting device according to the embodiment of the present invention is collapsed. As described above, the frame 10 has collapsible parts 13, which are formed at opposed positions and are collapsible vertically on the basis of hinge portions H. Therefore, the safety helmet lighting device according to the embodiment of the present invention is easy to carry and keep in safety.

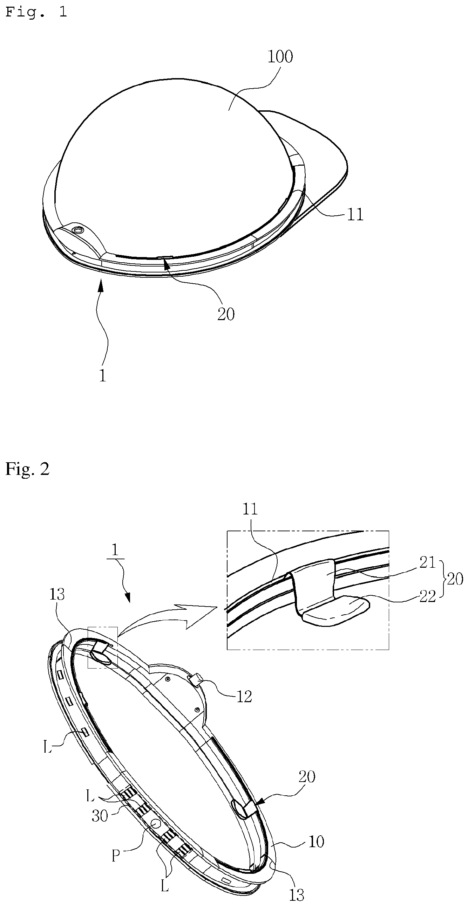

Referring to FIG. 1, an operational state of the safety helmet lighting device according to the embodiment of the present invention will be described.

The safety helmet lighting device 1 according to the embodiment of the present invention is mounted on the safety helmet 100, and then, the fastening means of which one end is connected to the frame 10 is hooked to the inside of an end of the safety helmet 100.

In the above state, when the user pushes the power button 12, the light-emitting portions L emit light. So, the user can work or do various activities using the strong light emitted from the headlight portion 30 disposed on the front surface.

Moreover, the safety helmet lighting device lets people know the user's location to prevent safety accidents since the light-emitting portions L disposed on the lateral side or the rear side emit light.

Furthermore, the safety helmet lighting device according to the embodiment of the present invention can indicate a distant object with the laser pointer P if necessary.

Additionally, the controller of the safety helmet lighting device can control dimming or flickering of the light-emitting portions. Especially, the safety helmet lighting device according to the embodiment of the present invention can improve visibility by letting people know the user's location through control of flickering.

In addition, the controller 50 of the safety helmet lighting device can control colors of the light-emitting portions. For instance, the light-emitting portions usually emit white light but emit red light in dangerous circumstances.

Moreover, the safety helmet lighting device according to the embodiment of the present invention may further include a vibration motor (not shown), which generates vibration if the residual quantity of the battery is less than the predetermined quantity.

Preferably, the vibration motor is disposed inside the controller 50. Therefore, if the residual quantity of the battery is short, the user recognizes vibration of a vibrator and can have a chance to charge the battery.

Furthermore, the controller flickers the light-emitting portions L if the residual quantity of the battery B is short. However, the flickering speed of the light-emitting portions due to lack of the residual quantity of the battery is faster than the normal flickering speed of the light-emitting portions in order to show urgency.

Additionally, the frame 10 further includes a motion sensor (not shown) to allow the user to recognize the user's motion. Therefore, if the user's motion is not sensed for a predetermined period of time according to the sensed result of the motion sensor, in order to minimize consumption of the battery, the controller turns off the light-emitting portions L.

The exemplary embodiments of the present invention have been described in more detail with reference to the accompanying drawings, but the present invention is not limited to the exemplary embodiments, and may be variously modified and carried out within the scope of the present invention as defined by the following claims.

### [Industrial Applicability]

As described above, the safety helmet lighting device can emit light by the light-emitting portions using the portable battery, and warn shortage of remaining quantity of the battery through vibration or flickering.

## Claims

1. A safety helmet lighting device comprising:
a frame (10) formed in a ring shape to be mounted on the outer circumferential surface of a safety helmet;
a plurality of light-emitting portions (L) provided on the outer face of the frame (10);
a battery (B) for supplying electric power;
a controller (50) for controlling brightness and colors of the light-emitting portions (L); and
close contact means (20) for preventing the frame (10) from being separated from the safety helmet,
**characterized in that** the close contact means (20) include a plate spring (21) formed by a metal plate bent disposed on the inner face of the frame (10) and elastically transformed when the frame (10) is mounted on the safety helmet; and
a friction pad (22) surrounding an end of the plate spring (21) and made of a material that is configured to get in contact with the safety helmet and to prevent slipping, and
wherein the frame (10) includes a guide groove (11) for allowing the plate springs (21) disposed on the frame (10) to be movable along the inner surface of the frame (10).

2. The safety helmet lighting device according to claim 1, wherein the battery (B) is a portable battery which is electrically connected with the frame (10) via a cable.

3. The safety helmet lighting device according to claim 1 or 2, wherein the frame (10) includes a vibrator for generating vibration in order to let a user know shortage of the residual quantity of the battery (B) if the residual quantity of the battery (B) is less than a predetermined quantity.

4. The safety helmet lighting device according to any one of the preceding claims, wherein the controller (50) controls flickering of the light-emitting portions (L) if the residual quantity of the battery (B) is less than a predetermined quantity.

5. The safety helmet lighting device according to any one of the preceding claims, wherein the frame (10) includes a motion sensor for recognizing the user's motion, and the controller (50) turns off the light-emitting portions (L) when there is no motion for a predetermined period of time according to the sensed result of the motion sensor.

6. The safety helmet lighting device according to any one of the preceding claims, wherein the frame (10) includes a first frame and a second frame which are disposed to be collapsible.

## Patentansprüche

1. Beleuchtungsvorrichtung für Sicherheitshelm, umfassend:
einen Rahmen (10), der ringförmig ausgebildet ist, um auf der äußeren Umfangsfläche eines Sicherheitshelms montiert zu werden;
eine Mehrzahl von lichtemittierenden Abschnitten (L), die auf der äußeren Fläche des Rahmens (10) vorgesehen sind;
eine Batterie (B), um elektrische Energie zu liefern;
eine Steuerung (50), um die Helligkeit und die Farben der lichtemittierenden Abschnitte (L) zu steuern; und
Mittel (20) für einen engen Kontakt, um zu verhindern, dass der Rahmen (10) von dem Sicherheitshelm getrennt wird,
**dadurch gekennzeichnet, dass** die Mittel (20) für einen engen Kontakt eine Blattfeder (21) beinhalten, die aus einer Metallplatte gebildet ist, die gebogen auf der inneren Fläche des Rahmens (10) angeordnet und elastisch verformt wird, wenn der Rahmen (10) auf dem Sicherheitshelm montiert wird; und
einen Reibbelag (22), der ein Ende der Blattfeder (21) umgibt und aus einem Material besteht, das so konfiguriert ist, dass es mit dem Sicherheitshelm in Kontakt kommt und ein Verrutschen verhindert, und
wobei der Rahmen (10) eine Führungsnut (11) aufweist, dies es ermöglicht,
dass die Blattfedern (21), die auf dem Rahmen (10) angeordnet sind, entlang der Innenfläche des Rahmens (10) bewegt werden können.

2. Beleuchtungsvorrichtung für Sicherheitshelm gemäß Anspruch 1, wobei die Batterie (B) eine tragbare Batterie ist, die über ein Kabel mit dem Rahmen (10) elektrisch verbunden ist.

3. Beleuchtungsvorrichtung für Sicherheitshelm nach Anspruch 1 oder 2, wobei der Rahmen (10) einen Vibrator beinhaltet, um Vibrationen zu erzeugen, um einen Benutzer über einen Mangel an Restkapazität der Batterie (B) in Kenntnis zu setzen, wenn die Restkapazität der Batterie (B) geringer als eine vorgegebene Kapazität ist.

4. Beleuchtungsvorrichtung für Sicherheitshelm nach einem der vorangehenden Ansprüche, wobei die Steuerung (50) ein Flackern der lichtemittierenden Abschnitte (L) steuert, wenn die Restkapazität der Batterie (B) geringer als eine vorgegebene Kapazität ist.

5. Beleuchtungsvorrichtung für Sicherheitshelm nach einem der vorangehenden Ansprüche, wobei der Rahmen (10) einen Bewegungssensor beinhaltet, um die Bewegung des Benutzers zu erkennen, und die Steuerung (50) die lichtemittierenden Abschnitte (L) ausschaltet, wenn entsprechend dem erfassten Ergebnis des Bewegungssensors für eine vorgegebene Zeitperiode keine Bewegung erfolgt.

6. Beleuchtungsvorrichtung für Sicherheitshelm nach einem der vorangehenden Ansprüche, wobei der Rahmen (10) einen ersten Rahmen und einen zweiten Rahmen beinhaltet, die so angeordnet sind, dass sie zusammengeklappt werden können.

## Revendications

1. Dispositif d'éclairage de casque de sécurité, comprenant :
un cadre (10) de forme annulaire, à monter sur la surface circonférentielle extérieure d'un casque de sécurité ;
une pluralité de parties électroluminescentes (L) prévues sur la surface extérieure du cadre (10) ;
une batterie (B) pour fournir un courant électrique ;
un contrôleur (50) pour commander la luminosité et les couleurs des parties électroluminescentes (L) ; et
un moyen de contact étroit (20) pour empêcher que le cadre (10) soit séparé du casque de sécurité,
**caractérisé en ce que** le moyen de contact étroit (20) comprend un ressort à lame (21) formé par une plaque métallique pliée, disposée sur la surface intérieure du cadre (10) et déformée élastiquement quand le cadre (10) est monté sur le casque de sécurité ; et
une garniture de friction (22) entourant une extrémité du ressort à lame (21) et constituée d'un matériau prévu pour venir en contact avec le casque de sécurité et empêcher un glissement, et
où le cadre (10) présente une rainure de guidage (11) permettant au ressort à lames (21) disposé sur le cadre (10) d'être mobile sur la surface intérieure du cadre (10).

2. Dispositif d'éclairage de casque de sécurité selon la revendication 1, où la batterie (B) est une batterie portable reliée électriquement au cadre (10) par un câble.

3. Dispositif d'éclairage de casque de sécurité selon la revendication 1 ou la revendication 2, où le cadre (10) comprend un vibrateur pour générer des vibrations afin de faire connaître à un utilisateur la faiblesse du niveau de charge restant de la batterie (B) si ledit niveau de charge restant de la batterie (B) est inférieur à un niveau prédéfini.

4. Dispositif d'éclairage de casque de sécurité selon l'une des revendications précédentes, où le contrôleur (50) commande un clignotement des parties électroluminescentes (L) si ledit niveau de charge restant de la batterie (B) est inférieur à un niveau prédéfini.

5. Dispositif d'éclairage de casque de sécurité selon l'une des revendications précédentes, où le cadre (10) comprend un capteur de mouvement pour détecter un mouvement de l'utilisateur, et le contrôleur (50) désactive les parties électroluminescentes (L) si aucun mouvement n'est présenté pendant une durée prédéfinie d'après le résultat de détection du capteur de mouvement.

6. Dispositif d'éclairage de casque de sécurité selon l'une des revendications précédentes, où le cadre (10) comprend un premier cadre et un deuxième cadre, disposés de manière à être escamotables.
